# EUROPÄISCHE PATENTANMELDUNG

(11) **EP 1 617 102 A2**
(43) Veröffentlichungstag der Anmeldung: **18.01.2006**
(21) Anmeldenummer: 05106203.2
(22) Anmeldetag: 07.07.2005
(51) Int. Cl.: F16G 13/18

(54) **Kette für eine Schwenkeinrichtung zum Schließen und Öffnen von Klappen, Türen, Fenstern oder dergleichen**

(30) Priorität: 15.07.2004 DE 202004011119 U
(71) Anmelder: isa VentControl GmbH, 32549 Bad Oeynhausen (DE)
(72) Erfinder:
(74) Vertreter: Flötotto, Hubert

(57) **Zusammenfassung**

Die Erfindung betrifft eine Kette (1) für eine Schwenkeinrichtung zum Schließen und Öffnen von Klappen, Türen, Fenstern oder dergleichen, umfassend eine in einem Gehäuse vorgesehene Antriebseinheit, welche mit einer einseitig sich versteifenden Kette zusammenwirkt, die ein Ein- und Ausfahren der Klappe mit der auf Schub beanspruchbaren Kette (1) ermöglicht, und wobei die Kette (1) aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweils angrenzenden Kettengliedes angeordnet sind. Zwischen den Gelenkbolzen (3) und (4) eines jeden Kettengliedes (2) ist ein betätigbares Element (10) vorgesehen, welches die beidseitige Versteifung der Kette (1) bei Schub- oder Zugbeanspruchung bewirkt. Die Erfindung betrifft ebenfalls einen Stelltrieb umfassend eine in einem Gehäuse vorgesehene Antriebseinheit, welche mit einer einseitig sich versteifenden Kette (1) zusammenwirkt, wobei die Kette (1) aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweils angrenzenden Kettengliedes angeordnet sind, wobei zwischen den Gelenkbolzen (3) und (4) eines jeden Kettengliedes (2) ein betätigbares Element (10) vorgesehen ist, welches die beidseitige Versteifung der Kette (1) bei Schub- oder Zugbeanspruchung bewirkt.

## Beschreibung

Die Erfindung betrifft eine Kette für eine Schwenkeinrichtung zum Schließen und Öffnen von Klappen, Türen, Fenstern oder dergleichen, umfassend eine in einem Gehäuse vorgesehene Antriebseinheit, welche mit einer einseitig sich versteifenden Kette zusammenwirkt, die ein Ein- und Ausfahren der Klappe mit der auf Schub beanspruchbaren Kette ermöglicht, und wobei die Kette aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweiligen angrenzenden Kettengliedes angeordnet sind.

So ist aus dem Stand der Technik gemäß der US 4,014,136, sowie der US 5,156,574 eine Schwenkeinrichtung bzw. eine Kette, die mit der Schwenkeinrichtung zusammenwirkt, bekannt, die das Schließen bzw. Öffnen von Klappen, Fenstern, Türen oder dergleichen ermöglicht. Die Antriebseinheit besteht dabei aus einem Gehäuse, in dem ein angetriebenes Ritzel vorgesehen ist, welches mit den Kettenstrang bildenden Kettengliedern zusammenwirkt. Die Kette als solches ist dabei derart ausgebildet, dass sie sich in Schubrichtung einseitig versteift, so dass eine Schubkraft auf die zu öffnende Klappe bzw. die Tür oder das Fenster aufgebracht werden kann, um es in die offene Stellung zu bewegen. Die Kettenglieder selbst verfügen dabei über Außenlaschen, die in Verbindung mit der jeweiligen verbindenden Innenlasche eine einseitige Versteifung herbeiführen.

Bei diesen nach dem Stand der Technik bekannten Gliederketten wird es als nachteilig angesehen, dass die Kette aufgrund ihrer einseitigen Versteifung zwar in einer Richtung Querkräfte aufnehmen kann, jedoch zur gelenkig ausgebildeten Seite einknicken kann. Dies wirkt sich im Besonderen bei Schwenkeinrichtungen, die äußeren Einflüssen, wie unterschiedlichen Wetterbedingungen, ausgesetzt sind, als nachteilig aus. Bei derartigen Klappen, die dann zur Außenseite mittels einer derartigen Schwenkeinrichtung betätigt werden, kann es vorkommen, dass infolge von auftretendem Winddruck oder Sog ein sogenanntes ungewolltes Zuschlagen der Klappe, der Tür, des Fensters oder dergleichen, nicht verhindert werden kann.

Hieraus ergibt sich die der Erfindung zugrunde liegende Aufgabe, eine Kette für eine Schwenkeinrichtung zum Schließen und Öffnen von Klappen, Türen, Fenstern oder dergleichen derart weiterzubilden, die ein ungewolltes Zuschlagen der Klappe, der Tür oder des Fensters bei auftretenden äußeren Einflüssen unterbindet.

Diese Aufgabe wird erfindungsgemäß dadurch gelöst, dass zwischen den Gelenkbolzen eines jeden Kettengliedes ein betätigbares Element vorgesehen ist, welches die beidseitige Versteifung der Kette bei Schubbeanspruchung bewirkt. Die Anbringung eines zu betätigenden Elementes an jedem Kettenglied, welches die Versteifung der einzelnen Kettenglieder zueinander bewirkt, verwandelt die Kette im ausgefahrenen Zustand zu einem selbstversteifenden Gliederstab, so dass dieser bei auftretendem Winddruck oder Sog ein Zurückschwenken der Klappe, der Tür oder des Fensters unterbindet. Durch diese Ausbildung wird ein Linearantrieb geschaffen, der in der Lage ist, einerseits als verstarrender Gliederstab zu wirken, wobei andererseits der Linearantrieb in der Lage ist, infolge seiner einseitig wieder verschwenkbaren Kettenglieder, in einem Gehäuse in einem aufgerollten Zustand verbracht zu werden, um ihn raumsparend vorzuhalten.

Nach einer vorteilhaften Weiterbildung der Erfindung umfasst das Element einen verschiebbaren Stab, der im eingeschobenen Zustand die Innenlasche und die Außenlasche durchsetzt. Aufgrund dieser Ausbildung wird erreicht, dass das jeweilige einzelne Kettenglied in einen verriegelten Zustand verbracht werden kann. Der Stift als solches ist dabei an einer der Außenlaschen unverlierbar angeordnet. Zur Betätigung der einzelnen im Kettenstrang angeordneten Stifte ist eine Kulissenführung vorgesehen. In zweckmäßiger Weise ist hierzu der einzelne Stift endseitig von einem Bolzen durchsetzt, der in einer Führungsbahn der Kulissenbahn zwangsgeführt ist. Somit wird ein Instrument geschaffen, welches die Stiftanordnung in den einzelnen Kettengliedern zwangsbetätigt, um die Verwandelbarkeit der Kette zu gewährleisten.

In vorteilhafter Weiterbildung der Erfindung dringen die Stifte bei Schubbeanspruchung der Kette durch die Führungsbahn der Kulisse in das jeweilige Kettenglied ein, wobei bei Zugbeanspruchung das jeweilige Kettenglied wieder entriegelt wird. Dadurch wird die sogenannte Verwandelbarkeit von sich verstarrendem Gliederstab zu aufrollbarer Kette geschaffen.

In Weiterbildung der Erfindung weist die Führungsbahn einen unter einer Steigung verlaufenden Bereich auf, an den sich ein unter einer Distanz zur Kettenführung parallel verlaufender Bereich anschließt. Es versteht sich nun von selbst, dass, wenn die Kette in die Kulisse einfährt, der Stab über den Weg der Schräge angehoben wird, so dass er insbesondere die Innenlasche wieder freigibt, und die einseitige Beweglichkeit der Kette wieder herbeigeführt wird.

Die Kulissenführung bzw. die Führungsbahn ist dabei in vorteilhafter Weise derart ausgestaltet, dass sich ein unter einer Distanz der Kettenführung parallel verlaufender Bereich anschließt, so dass in diesem Bereich ein Ritzel oder dergleichen angreifen kann, um beispielsweise im Bereich der Kulissenführung auch den Antrieb mit einzubinden.

In vorteilhafter Weiterbildung kann dabei die Führungsbahn gerade oder gebogen ausgebildet sein. Die Kulissenführung als solches kann in vorteilhafter Weise aus einem Kunststoffformteil oder einem Metallformteil gebildet sein, in dem der Kettenführungskanal und die Führungsbahn eingeformt sind.

In Weiterbildung der Erfindung wird vorgeschlagen, dass die die Führungsbahn bildende Kulissenführung gelenkig ausgebildet ist. Ein Gelenk in der Führungsbahn anzuordnen bringt den Vorteil, dass infolge des Aufschwenkens die sich ergebende Winkelkomponente mit berücksichtigt wird, wenn der Kettenstrang ausgefahren wird.

In Weiterbildung betrifft die Erfindung auch einen Stelltrieb, umfassend eine in einem Gehäuse vorgesehene Antriebseinheit, welche mit einer einseitig sich versteifenden Kette zusammenwirkt, wobei die Kette aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweils angrenzenden Kettengliedes angeordnet sind, wobei ein derartiger Stelltrieb mit den geschilderten erfindungsgemäßen Merkmalen ausgestattet ist. Durch diese Ausbildung wird ein Stellantrieb als Linearantrieb geschaffen, der in der Lage ist, einerseits als verstarrender Gliederstab zu wirken, wobei andererseits der Linearantrieb in der Lage ist, infolge seiner einseitig wieder verschwenkbaren Kettenglieder, in einem Gehäuse in einem aufgerollten Zustand verbracht zu werden, um ihn raumsparend vorzuhalten.

Ein Ausführungsbeispiel der Erfindung wird anhand der nachstehenden Figuren 1 bis 5 näher erläutert; dabei zeigen:
- Figur 1:: Eine perspektivische Ansicht einer Kette mit verriegelbarem Versteifungselement in der Perspektive;
- Figur 2:: Eine weitere perspektivische Ansicht der Kette gemäß der Figur 1 unter Aussparung einer Außenlasche;
- Figur 3:: Eine Draufsicht auf die erfindungsgemäße Kette in Einbindung einer Führungskulisse;
- Figur 4:: Eine geschnittene Ansicht der Führungskulisse mit eingefasstem Kettenglied und verschiebbarem Stift;
- Figur 5:: Eine weitere perspektivische Darstellung in zwei Ansichten einer Kette mit einer gelenkig ausgebildeten Führungskulisse.

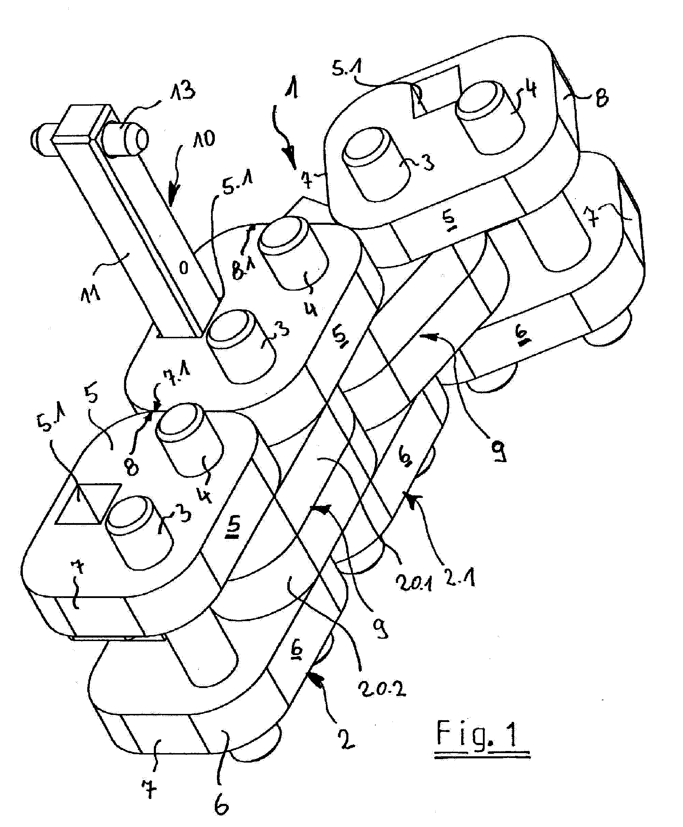

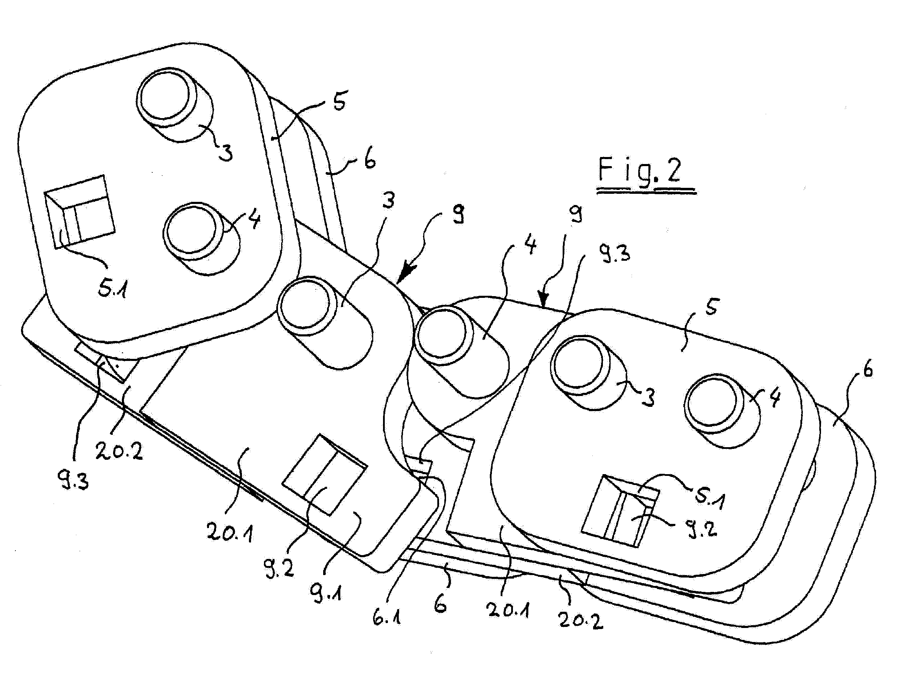

Die Figur 1 sowie die Figur 2 zeigen eine Kette 1, die vorzugsweise für eine nicht näher dargestellte Schwenkeinrichtung zum Schließen und Öffnen von Klappen, Türen, Fenstern oder dergleichen bestimmt sein kann. Die Schwenkeinrichtung umfasst dabei eine in einem Gehäuse vorgesehene Antriebseinheit vorzugsweise mit einem Ritzel, das ebenfalls nicht weiter aus den Darstellungen der Figuren 1 und 2 hervorgeht. Der vorzugsweise als Ritzel ausgebildete Antrieb wirkt dabei mit einer einseitig sich versteifenden Kette 1 derart zusammen, die ein Ein- und Ausfahren der Klappe mit der auf Schub beanspruchten Kette 1 ermöglicht. Dabei lässt die Kette 1 aufgrund ihrer einseitig gelenkigen Ausbildung im eingefahrenen Zustand eine Aufwicklung in einem ebenfalls nicht näher dargestellten Gehäuse zu.

Die Kette 1 wird dabei aus einzelnen Kettengliedern 2 gebildet, wobei das einzelne Kettenglied 2 aus zwei mit Bolzen 3 und 4 durchsetzten sich versteifenden Außenlaschen 5 und 6 gebildet wird. Wie insbesondere aus der Figur 1 zu erkennen ist, sind die Bolzen 3 und 4 derart in die Außenlaschen 5 und 6 eingebunden, dass die Außenlaschen 5 und 6 jeweils Flanken 7 und 8 aufweisen, die bei Aufschwenken der Kette 1 jeweils zur Anlage mit dem entsprechend anliegenden Flanken 7.1 und 8.1 des benachbarten Kettengliedes 2.1 kommen. Es versteht sich nun von selbst, dass in einem derart aufgeschwenkten Zustand sich eine einseitige Versteifung der Kette 1 bildet.

Zur Bildung des Kettenstranges als solches sind zwischen den Außenlaschen 5 und 6 jeweils Innenlaschen 9 zur herstellenden Verbindung des jeweilig angrenzenden Kettengliedes 2.1 angeordnet. Um die zweiseitige Versteifung des Kettenstranges der Kette 1 zu erreichen, ist zwischen den Gelenkbolzen 3 und 4 eines jeden Kettengliedes 2 ein betätigbares Element 10 angeordnet, welches die beidseitige Versteifung der Kette 1 zum Beispiel bei Schubbeanspruchung bewirkt. Das Element 10 umfasst hierbei einen verschiebbaren Stift 11, der im eingeschobenen Zustand die Innenlasche 9 und die Außenlasche 6 durchsetzt. Ist der Stift 11 eingedrückt, so erfolgt eine Verriegelung der Innenlasche 9, so dass sich eine Verstarrung zwischen den Kettengliedern 2 einstellt.

Gemäß der Darstellung der Figur 2, in der insbesondere die Innenlasche 9 freigelegt ist, erkennt man, dass sich die Innenlasche 9 aus zwei übereinander angeordneter Ebenen 20.1 und 20.2 zusammensetzt, wobei beide Ebenen 20.1 und 20.2 von den Bolzen 3 und 4 durchsetzt werden. Beide hierbei horizontal versetzt angeordnete Ebenen 20.1 und 20.2 greifen formschlüssig ineinander. Hierbei weist die erste Ebene 20.1 einen zungenförmigen Ansatz 9.1 auf, in dem eine Durchtrittsöffnung 9.2 für den Stift 11 angeordnet ist. Die Durchtrittsöffnung 9.2 korrespondiert bei Ausrichtung des Kettenstranges mit der Durchtrittsöffnung 6.1 der Außenlasche 6. Der Ansatz 9.1 überdeckt hierbei die zweite Ebene 20.2 der angrenzenden Innenlasche 9, wobei ebenfalls in der zweiten Ebene 20.2 eine Durchtrittsöffnung 9.3 angeordnet ist die wiederum mit der Durchtrittsöffnung 6.1 der Außenlasche 6 fluchtet wenn der Kettenstrang bzw. die angrenzenden Kettenglieder 2 ausgerichtet sind.

Der Stift 11 ist hierbei an der Außenlasche 5 unverlierbar in einer Öffnung 5.1 angeordnet. Hierbei können beispielsweise am Schaft des Stiftes 11 nicht näher dargestellte Rastelemente vorgesehen sein, die ein ungewolltes Herausziehen des Stiftes 11 aus der Öffnung 5.1 verhindern.

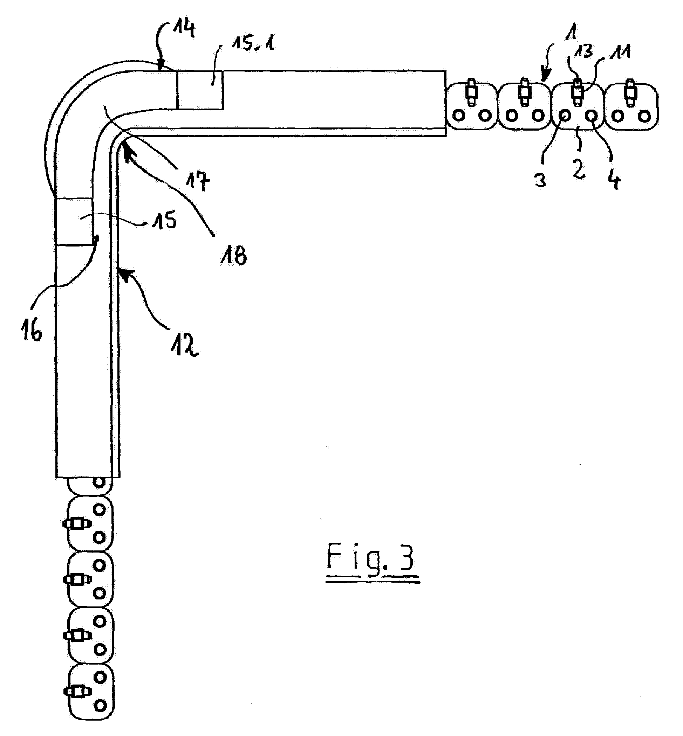

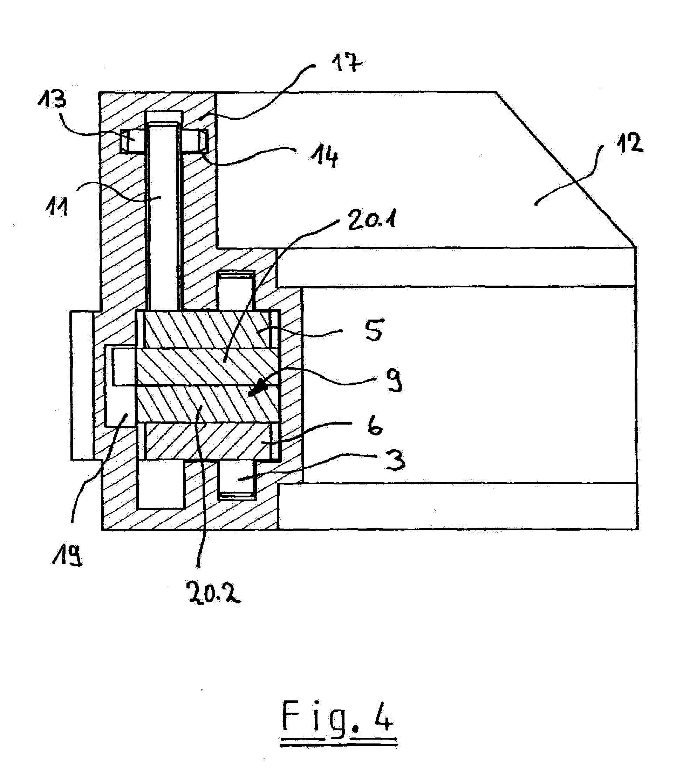

Wie insbesondere aus den Figuren 3 und 4 zu erkennen ist, ist zur Betätigung der einzelnen im Kettenstrang angeordneten Stifte 11 eine Kulissenführung 12 vorgesehen. Wie insbesondere aus der Figur 4 in der Schnittdarstellung zu erkennen ist, ist der einzelne Stift 11 endseitig von einem Bolzen 13 durchsetzt, der in einer Führungsbahn 14 der Kulissenführung 12 zwangsgeführt ist. Die Stifte 11 dringen bei vorzugsweise bei Schubbeanspruchung der Kette 1 durch die Führungsbahn 14 der Kulisse 12 in das jeweilige Kettenglied 2 ein, wobei bei Zugbeanspruchung das jeweilige Kettenglied 2 wieder entriegelt wird.

Um diesen Vorgang zu verwirklichen, weist die Führungsbahn 14 einen unter einer Steigung 15 verlaufenden Bereich auf, an den sich ein unter einer Distanz zur Kettenführung 16 parallel verlaufender Bereich 17 anschließen kann. Es versteht sich nun von selbst, dass, wenn beispielsweise die Kette 1 in Richtung auf die Kulissenführung 12 bewegt wird, der Bolzen 13 in den schräg verlaufenden Bereich 15 der Führungsbahn 14 eintritt und infolge der Zwangsführung der einzelne Stift 11 aus dem Kettenglied 2 herausgezogen wird, so dass die Außenlasche 6 und die Innenlasche 9 freigegeben werden, wie dies in der Figur 4 deutlich zu erkennen ist.

Die Kette 1 ist dann in der Lage, insbesondere den Kurvenbogen 18 zu durchfahren, weil ihre zweiseitige Versteifung aufgehoben ist. Die Führungsbahn 14 kann dabei auch gerade ausgebildet sein, wobei es nicht unbedingt erforderlich ist, dass sich eine weitere Schräge 15.1 an den parallel verlaufenden Bereich 17 anschließen muss, wenn beispielsweise gewünscht wird, dass die Kette 1 in einem nicht näher dargestellten Gehäuse aufgerollt werden soll.

In Weiterbildung der Erfindung kann dabei die Kulissenführung 12 vorzugsweise aus einem Kunststoffformteil oder einem Metallformteil, wie es beispielsweise in den Figuren 3 und 4 angedeutet ist, ausgebildet sein, in dem ein Kettenführungskanal 19 und die Führungsbahn 14 eingeformt sind.

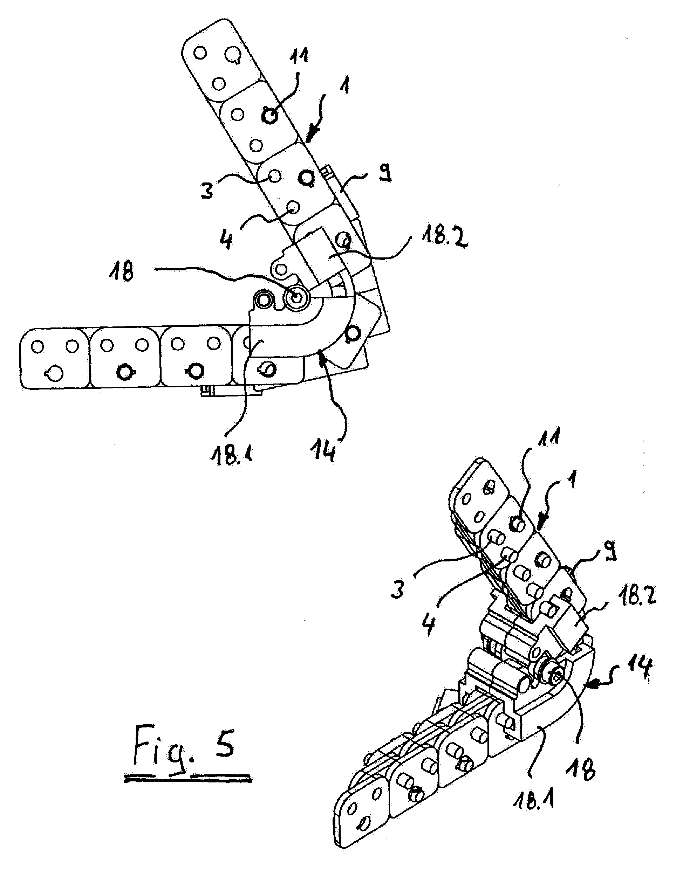

Die Figur 5 zeigt in zwei Ansichten eine weitere vorteilhafte Ausgestaltung insbesondere der Führungsbahn 14, wobei die Führungsbahn 14 gebogen oder rechtwinklig ausgebildet ist, und im Bogenbereich eine Gelenkstelle 18 aufweist. Die beiden Führungsbereiche 18.1 und 18.2 sind zueinander gelenkig gestaltet. Bei dieser gelenkigen Ausführungsform wird insbesondere die sich ergebende Winkelstellung beim Ausfahren einer Klappe, einer Tür, eines Fensters berücksichtigt, so dass es zu keiner Zwangsbiegung in der sich versteifenden erfindungsgemäßen Kette 1 kommt.

## Patentansprüche

1. Kette für eine Schwenkeinrichtung zum Schließen und Öffnen von Klappen, Türen, Fenstern oder dergleichen, umfassend eine in einem Gehäuse vorgesehene Antriebseinheit, welche mit einer einseitig sich versteifenden Kette zusammenwirkt, die ein Ein- und Ausfahren der Klappe mit der auf Schub beanspruchbaren Kette ermöglicht, und wobei die Kette aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweils angrenzenden Kettengliedes angeordnet sind, **dadurch gekennzeichnet, dass** zwischen den Gelenkbolzen (3) und (4) eines jeden Kettengliedes (2) ein betätigbares Element (10) vorgesehen ist, welches die beidseitige Versteifung der Kette (1) bei Schub- oder Zugbeanspruchung bewirkt.

2. Kette nach Anspruch 1, **dadurch gekennzeichnet, dass** das Element (10) einen verschiebbaren Stift (11) umfasst, der im eingeschobenen Zustand die Innenlasche (9) und die Außenlasche (6) durchsetzt.

3. Kette nach Anspruch 2, **dadurch gekennzeichnet, dass** der Stift (11) an der Außenlasche (5) unverlierbar angeordnet ist.

4. Kette nach den Ansprüchen 1 bis 3, **dadurch gekennzeichnet, dass** zur Betätigung der einzelnen im Kettenstrang angeordneten Stifte (11), eine Kulissenführung (12) vorgesehen ist.

5. Kette nach Anspruch 4, **dadurch gekennzeichnet, dass** der einzelne Stift (11) endseitig von einem Bolzen (13) durchsetzt ist, der in einer Führungsbahn (14) der Kulissenführung (12) zwangsgeführt ist.

6. Kette nach Anspruch 5, **dadurch gekennzeichnet, dass** die Stifte (11) bei Schubbeanspruchung der Kette (1) durch die Führungsbahn (14) der Kulissenführung (12) in das jeweilige Kettenglied (2) eindringen und bei Zugbeanspruchung das jeweilige Kettenglied wieder entriegeln kann.

7. Kette nach Anspruch 6, **dadurch gekennzeichnet, dass** die Führungsbahn (14) einen unter einer Steigung verlaufenden Bereich (15) aufweist, an den sich ein unter einer Distanz zur Kettenführung parallel verlaufender Bereich (17) anschließt.

8. Kette nach Anspruch 7, **dadurch gekennzeichnet, dass** die die Führungsbahn (14) bildende Kulissenführung (12) gelenkig ausgebildet ist.

9. Kette nach einem oder mehreren der Ansprüche 1 bis 8, **dadurch gekennzeichnet, dass** die Kulissenführung (12) vorzugsweise aus einem Kunststoffformteil oder Metallformteil gebildet ist, in dem der Kettenführungskanal (19) und die Führungsbahn (14) eingeformt sind.

10. Stelltrieb umfassend eine in einem Gehäuse vorgesehene Antriebseinheit, welche mit einer einseitig sich versteifenden Kette zusammenwirkt, wobei die Kette aufgrund ihrer einseitig gelenkigen Ausbildung im eingefahrenen Zustand eine Aufwicklung in dem Gehäuse zulässt, wobei das einzelne Kettenglied aus zwei mit Bolzen durchsetzte Außenlaschen gebildet ist, zwischen denen jeweils Innenlaschen zur herstellenden Verbindung des jeweils angrenzenden Kettengliedes angeordnet sind insbesondere nach den Merkmalen der Ansprüche 1 bis 9.
